# EUROPÄISCHE PATENTSCHRIFT

(11) **EP 1 468 035 B1**
(45) Veröffentlichungstag und Bekanntmachung des Hinweises auf die Patenterteilung: **06.07.2005**
(21) Anmeldenummer: 03704361.9
(22) Anmeldetag: 08.01.2003
(51) Int. Cl.: C08G 63/08, C08G 63/78

(54) **VERFAHREN ZUR HERSTELLUNG VON RESORBIERBAREN POLYESTERN DURCH MASSEPOLYMERISATION**
METHOD FOR PRODUCING RESORBABLE POLYESTERS BY MASS POLYMERIZATION
PROCEDE DE PRODUCTION DE POLYESTERS RESORBABLES PAR POLYMERISATION EN MASSE

(30) Priorität: 11.01.2002 DE 10200738
(43) Veröffentlichungstag der Anmeldung: 20.10.2004
(73) Patentinhaber: Boehringer Ingelheim Pharma GmbH & Co.KG, 55216 Ingelheim am Rhein (DE)
(72) Erfinder: BUCHHOLZ, Berthold, 55437 Ockenheim (DE); WEBER, Andreas, 54483 Kleinich (DE); SCHELLHORN, Matthias, 55457 Horrweiler (DE)
(86) Internationale Anmeldenummer: PCT/EP2003/000096
(87) Internationale Veröffentlichungsnummer: WO 2003/057756

(56) Entgegenhaltungen:
- EP-A- 0 661 325
- WO-A-84/04311
- US-A- 4 379 138

## Beschreibung

Die Erfindung betrifft ein Verfahren zur Herstellung von resorbierbaren Polyestern durch Massepolymerisation, wobei die Reaktionskomponenten in einem Rührwerksreaktor aufgeschmolzen und homogenisiert werden, die Reaktionsmischung anschließend in mehrere kleinervolumige Behälter überführt wird, die Reaktionsmischung in diesen Behältern auspolymerisiert wird und der erhaltene Polyester durch Entnahme aus den Behältern isoliert wird.

### Hintergrund der Erfindung

Resorbierbare Polyester im Sinne des vorliegenden Verfahrens sind aliphatische Polyester auf der Basis von Lactid (L-Lactid, D-Lactid, DL-Lactid, meso-Lactid) oder Glycolid sowie Copolymere mit zwei oder mehr unterschiedlichen Comonomereinheiten aus den genannten Monomeren untereinander und Copolymere der genannten Monomere mit Trimethylencarbonat (TMC) und/oder ε-Caprolacton. Diese Gruppe von Polyestern wird vorzugsweise für die Herstellung von resorbierbaren Implantaten zum Einsatz im menschlichen oder tierischen Körper verwendet, wie beispielsweise für Fixationselemente, Folien, Membranen, Nahtfäden oder auch für pharmazeutische Freigabesysteme.

Polymerisationsverfahren zur Herstellung von resorbierbaren Polyestern sind aus dem Stand der Technik bekannt. Neben Polykondensationsverfahren, die nur die Herstellung relativ niedermolekularer Polyester erlauben, erfolgt ihre Herstellung vorzugsweise durch ringöffnende Polymerisation der entsprechenden cyclischen Monomeren, nämlich L-Lactid, D-Lactid, DL-Lactid, meso-Lactid, Glycolid, Trimethylencarbonat, ε-Caprolacton unter Zusatz von Metallkatalysatoren. Aus dem Stand der Technik ist eine Vielzahl von Katalysatoren bekannt. Bevorzugt werden Zinn- oder Zinkverbindungen eingesetzt. Nach dem Stand der Technik können auch Additive in die Reaktionsmischung gegeben werden, die es gestatten, das Molekulargewicht im Polymeren zu kontrollieren (Kettenlängenmoderatoren). Bewährt haben sich u. a. aliphatische Alkohole wie Ethanol, Dodecanol, Hydroxycarbonsäuren, wie Glycol- oder Milchsäure oder auch oligomere Milchsäuren oder Wasser.

Für die ringöffnende Polymerisation von Lactiden und verwandten Lactonen ist aus dem Stand der Technik ebenfalls eine Reihe von Verfahrenstechniken bekannt. Beschrieben sind die Schmelzepolymerisation, Massepolymerisation, Lösungspolymerisation und Suspensionspolymerisation (z.B. J. Nieuwenhuis, Clinical Materials, 10, 59 - 67, 1992). Hiervon haben die Schmelze- und die Massepolymerisation die größte technische Bedeutung. Der Unterschied zwischen beiden Verfahrenstechniken liegt in der Reaktionstemperatur. Während bei der Schmelzepolymerisation alle Reaktionskomponenten in geschmolzenem Zustand vorliegen, wird die Massepolymerisation bei einer Temperatur durchgeführt, die zwischen den Schmelzpunkten des jeweiligen Monomeren und Polymeren liegt. Je nach Typ des Monomeren/Polymeren kann die Temperatur bei der Massepolymerisation zwischen ca. 50 °C und 180 °C liegen, während für Schmelzepolymerisationen i. A. Temperaturen im Bereich von ca. 190 bis 230 °C gewählt werden müssen.

Der Vorteil der Massepolymerisation gegenüber der Schmelzepolymerisation besteht in der niedrigeren Reaktionstemperatur: Aufgrund der gemäßigten Temperatur treten Nebenreaktionen nur in wesentlich geringerem Ausmaß auf. Nebenreaktionen bei der Polymerisation sind einerseits nachteilig, da sie einen Kettenabbruch in der Wachstumsreaktion bewirken und somit das Molekulargewicht im Polymeren reduzieren. Resorbierbare Polyester mit sehr hohem Molekulargewicht sind daher nur durch Massepolymerisation und nicht in Schmelze herstellbar. Die hohen Reaktionstemperaturen der Schmelzepolymerisation haben auch den Nachteil, dass die resultierenden Polymere Verfärbungen aufweisen können. Diese bei hohen Temperaturen erzeugten Verunreinigungen sind im allgemeinen polymergebunden und können somit nicht in einem nachfolgenden Reinigungsschritt aus dem Produkt entfernt werden. Im Hinblick auf den bevorzugten Einsatz der Polyester im menschlichen Körper ist es vorteilhaft, Verunreinigungen jeglicher Art zu vermeiden.

Ein weiterer Vorteil einer geringen Reaktionstemperatur kann auch die Unterdrückung von Umesterungen während der Polymerisation sein. Hierdurch ist es bei Copolymerisationen möglich eine starke Randomisierung der Monomersequenzen zu verhindern. Aufgrund der unterschiedlichen Reaktivitäten der einzelnen Monomere gelingt es also bei tiefer Temperatur, Copolymere mit blockartiger Sequenz zu erzeugen.

Es ist insbesondere hinsichtlich Poly(L-Lactid) z.B. aus den US Patentschriften US 4,539,981 und US 4,550,449 sowie von J. Leenslag, A. Pennings, Makromol. Chem. 188, 1809 - 1814, 1987 bekannt, dass durch geeignete Wahl der Reaktionsbedingungen wie Reaktionstemperatur und -zeit sowie Konzentration des Katalysators und des Kettenlängenmoderators die Massepolymerisation hinsichtlich Molekulargewicht des Reaktionsproduktes und Umsetzungsgeschwindigkeit entsprechend gesteuert werden kann.

Während die Schmelzepolymerisation problemlos in geeigneten Polymerisationsapparaturen entweder kontinuierlich oder diskontinuierlich im großen Maßstab durchgeführt werden kann, bereitet die Massepolymerisation verfahrenstechnisch in größerem Maßstab jedoch ganz erhebliche Schwierigkeiten: Weil sich die Reaktionsmasse während der Polymerisation verfestigt, ist eine Reaktionsführung in gerührten Reaktoren nicht möglich. Das Reaktionsprodukt weist die Form der Innenwandung des Reaktors auf und muss als kompakter Block dem Reaktor entnommen werden. Mit zunehmendem Maßstab der Reaktionsansätze entstehen somit zunehmend größere Materialblöcke. Die Handhabung und auch anschließende Zerkleinerung zu verarbeitungsfähigem Granulat wird daher ab einer bestimmten Größenordnung unmöglich gemacht. Eine weitere Schwierigkeit besteht in der Abfuhr der Reaktionswärme. Da die vorliegenden Polymerisationen stark exotherm verlaufen, und zudem die sich bildende Polymermasse sehr schlechte Wärmeleitfähigkeit aufweist, können in größeren Reaktoren Temperaturgradienten entstehen, die Anlass zu starken, und nicht zu tolerierenden Inhomogenitäten im Produkt geben. Die Inhomogenitäten können sich in unterschiedlichen Molekulargewichten und bei Copolymeren auch in unterschiedlicher molarer Zusammensetzung äußern. Nach Literaturangaben (1) kann die Temperaturerhöhung im Inneren bis zu 80 °C betragen.

Während zur Wahl geeigneter Reaktionsparameter für die Massepolymerisation in kleinem Reaktionsmaßstab, insbesondere für Poly(L-Lactid) hinreichende Angaben aus der Literatur zu entnehmen sind, ist im Stand der Technik keine Lehre enthalten, wie die Reaktion in einem industriell durchführbaren Maßstab realisiert werden kann. Die in der Literatur aufgeführten Beispiele werden in einem Kleinmaßstab von maximal bis zu wenigen 100 g und zudem noch labormäßig in Glasreaktoren durchgeführt.

Es besteht daher die Aufgabe, ein industriell anwendbares Verfahren zur Herstellung von resorbierbaren Polyestern durch Massepolymerisation bei gemäßigten Temperaturen bereitzustellen, welches es gestattet, resorbierbare Polyester in hoher Qualität und im großen Maßstab herzustellen.

### Detaillierte Beschreibung der Erfindung

Bei der Entwicklung des Verfahrens wurde überraschenderweise gefunden, dass durch räumliche und apparative Trennung der Polymerisationsreaktion in einen größeren Ansatzreaktor zum Aufschmelzen und Homogenisieren der Reaktionskomponenten und in mehrere kleinere Subreaktoren, vorzugsweise aus Kunststoff für die eigentliche Polymerisationsreaktion die beschriebenen Schwierigkeiten überwunden werden können.

Beim vorliegenden Verfahren werden die cyclischen Monomere in an sich bekannter Weise unter Zusatz von Metallkatalysatoren und ggf. Kettenlängenmoderatoren zu den jeweiligen Polymeren bei Temperaturen umgesetzt, bei denen das Monomere im geschmolzenen Zustand vorliegt, das Reaktionsprodukt jedoch fest oder nahezu fest ist.

Gegenstand der Erfindung ist somit ein zur Herstellung von resorbierbaren Polyestern durch Massepolymerisation, wobei die Reaktionskomponenten in einem Rührwerksreaktor aufgeschmolzen und homogenisiert werden, die Reaktionsmischung anschließend in mehrere kleinervolumige Behälter, vorzugsweise Kunststoffflaschen, überführt wird, die Reaktionsmischung in diesen Behältern auspolymerisiert wird und der erhaltene Polyester durch Entnahme aus den Behältern isoliert wird.

Weiterhin betrifft die Erfindung die Verwendung eines nach dem erfindungsgemäßen Verfahren hergestellten, resorbierbaren Polyesters zur Herstellung von resorbierbaren Implantaten.

Bevorzugt ist ein Verfahren, welches folgende Schritte umfasst:
(a) Aufschmelzen des (oder der) Monomeren in einem Rührwerksreaktor;
   (a1) Zugabe des Katalysators;
   (a2) gegebenenfalls Zugabe eines Kettenlängenmoderators;
   (a3) Homogenisierung der Reaktionsmischung mittels eines Rührers;
(b) Überführung der Reaktionsmischung über ein Leitungssystem in kleinere Behälter aus Kunststoff;
(c) Durchführung der Polymerisationsreaktion in den Kunststoffbehältern bis der erwünschte Umsetzungsgrad der Polymerisation erreicht ist;
(d) Entnahme des entstandenen Polymerblocks aus dem Kunststoffbehälter.

Die weitere Aufarbeitung kann nach an sich bekannten Verfahrenstechniken, wie z. B. Mahlung zu einem Granulat und anschließende Extraktion zur Entfernung von nicht umgesetzten Monomeren oder auch durch Umfällungsverfahren erfolgen.

Bevorzugt sind solche Monomere, welche durch ringöffnende Polymerisation der entsprechenden cyclischen Monomeren polymerisiert werden können, zum Beispiel L-Lactid, D-Lactid, DL-Lactid, meso-Lactid, Glycolid, Trimethylencarbonat und ε-Caprolacton.

Bevorzugt sind Homopolyester aus gewählt aus der Gruppe der oder Polyglycolide, insbesondere Poly(L-Lactid) oder Poly(DL-Lactid).

Weiterhin bevorzugt sind Copolyester ausgewählt aus folgenden Gruppen:
- Polylactide, welche aus verschiedenen stereoisomeren Lactiden erhältlich sind, insbesondere Copolyester aus L-Lactid und DL-Lactid,
- Copolyester aus Glycolid oder Lactid und Trimethylencarbonat,
- Copolyester aus Lactid, insbesondere DL-Lactid oder L-Lactid und Glycolid,
- Copolyester aus Lactid und ε-Caprolacton.

Weiterhin bevorzugt sind Terpolymere, welche aus drei unterschiedlichen cyclischen Monomeren erhalten werden.

Die Zugabe des Katalysators kann als Substanz oder vorzugsweise als Lösung in einem inerten und physiologisch undenklichen Verdünnungsmittel erfolgen. Bevorzugt sind aliphatische oder aromatische Kohlenwasserstoffe, insbesondere Toluol oder Xylol.

Die Reihenfolge der Verfahrensschritte (a1) und (a2) kann ausgetauscht werden. Je nach Natur des Katalysators und Kettenlängenmoderators kann der Katalysator auch im Kettenlängenmoderator gelöst werden.

Während der gesamten Reaktion wird der über der Reaktionsmasse befindliche Luftraum mittels eines inerten und wasserfreien Gases inertisiert. Bevorzugt sind Argon, Helium und Stickstoff besonders bevorzugt ist Stickstoff.

Die Überführung der Reaktionsmasse vom Aufschmelzbehälter in die Kunststoffbehälter kann mittels konventioneller Pumpen, durch Schwerkraft oder auch durch Druckaufgabe mittels Inertgas, insbesondere Stickstoff auf den Aufschmelzreaktor erfolgen. Zur Entfernung potentiell vorhandener partikulärer Verunreinigungen aus der Schmelze kann ein Schmelzefilter aus Kunststoff oder Edelstahl zwischengeschaltet werden.

Das Füllvolumen des Kunststoffbehälters kann in einem Bereich zwischen 5 ml und 10 Litern liegen, bevorzugt in einem Bereich zwischen 100 ml und 5 Litern, ganz bevorzugt in einem Bereich zwischen 0,5 und 5 Litern, insbesondere bei etwa 1 Liter.

Als Rührwerksreaktor zum Aufschmelzen und Homogenisieren der Reaktionsmischung kann ein konventioneller Reaktor eingesetzt werden, dessen Innenwandung aus einem gegenüber der Reaktionsmischung chemisch inertem Werkstoff, beispielweise Edelstahl, Glas, Email oder Hastelloy besteht. Die bevorzugte Größe des Reaktors richtet sich nach der gewünschten Chargengröße und kann in einem Bereich zwischen 5 und 10.000 Litern betragen.

In der Regel beträgt das Verhältnis des Innenvolumen des Rührwerksreaktors zu dem des Innenvolumens eines der kleineren Behälter zwischen 1000 : 1 und 2 : 1, vorzugsweise 100 : 1 und 2,5 : 1, insbesondere zwischen 75 : 1 und 3 :1 liegt.

Für das Verfahren lassen sich Behälter aus Kunststoffen einsetzten, die bei den gewählten Reaktionstemperaturen chemisch und thermisch stabil sind. Bevorzugt werden Behälter aus Kunststoffen der Gruppe der Polyolefine, Polycarbonate oder fluorierte und teilfluorierte Kunststoffe. Besonders bevorzugt werden Polypropylen und Polytetrafluorethan (Teflon®).

Die Reaktionen werden in der Regel bei einer Temperatur zwischen 50 °C und 170 °C, vorzugsweise zwischen 60 °C und 160 °C, insbesondere zwischen 100 °C und 150 °C durchgeführt. Die bevorzugten (und besonders bevorzugten) Reaktionstemperaturen hängen vom jeweiligen Monomer bzw. Monomermischung ab und betragen beispielsweise bei:

| | |
|---|---|
| L-Lactid: | 105 bis 150 °C (105 bis 120 °C) |
| D-Lactid. | 105 bis 150 °C (105 bis 120 °C) |
| DL-Lactid: | 125 bis 150 °C (125 bis 140 °C) |
| meso-Lactid: | 60 bis 150 °C (90 bis 140 °C) |
| L/DL-Lactid | 110 bis 150 °C (110 bis 120 °C) |
| L-Lactid/TMC: | 105 bis 150 °C (105 bis 120 °C) |
| L-Lactid/ε-Caprolacton: | 105 bis 150 °C (105 bis 120 °C) |
| DL-Lactid/TMC. | 110 bis 150 °C (110 bis 130 °C) |
| L-Lactid/Glycolid: | 105 bis 150 °C (105 bis 120 °C) |
| DL-Lactid/Glycolid | 110 bis 150 °C (110 bis 120 °C) |
| Glycolid: | 130 bis 190 °C (140 bis 180 °C) |
| Glycolid/TMC: | 110 bis 190 °C (120 bis 160 °C) |

Die Reaktionen werden bevorzugt isotherm durchgeführt. In manchen Fällen ist es aber vorteilhaft, zur Vermeidung starker Exothermien bei niedriger Temperatur zu starten und im weiteren Verlauf der Reaktion die Temperatur anzuheben um die Umsetzungsgeschwindigkeit der Monomeren zu erhöhen. Dies gilt insbesondere für Polymerisationen, an denen Monomere mit vergleichsweise geringer Reaktivität, wie Trimethylencarbonat oder ε-Caprolacton beteiligt sind.

Als Katalysatoren werden Zinn- oder Zinkverbindungen bevorzugt, ganz besonders bevorzugt werden Zinn(II)halogenide wie Zinn(II)chlorid und Zinn(II)alkoxide wie Zinn(II)octanoat oder Zinn(II)ethylhexanoat. Als Additive zur Regulierung der Kettenlänge werden an sich bekannte Verbindungen verwendet wie aliphatische Alkohole, Säuren, Hydroxycarbonsäuren und deren Ester, Wasser oder auch oligomere Lactide. Bevorzugt werden Wasser, Milchsäure, oligomere Milchsäure, Ethyllactat oder Dodecanol.

Bei dem Verfahren werden die Katalysatoren bevorzugt in geringen Konzentrationen eingesetzt, um durch eine geringe Reaktionsgeschwindigkeit einerseits die Wärmeentwicklung während der Polymerisation zu minimieren und andererseits zu verhindern, dass die Reaktionsmasse bereits im Aufschmelzreaktor nennenswert polymerisiert, was wegen des Viskositätsanstiegs das Überfuhren in die Kunststoffbehälter erschweren würde. Weiterhin ist der Einsatz nur geringer Katalysatormengen in Hinblick auf den Einsatz der Polyester im menschlichen Körper vorteilhaft. Im Falle von Zinnverbindungen liegen die bevorzugten Konzentrationen bei 1 bis 200 ppm, ganz besonders bevorzugt bei 5 bis 100 ppm, insbesondere bei 10 bis 50 ppm (jeweils berechnet als Zinn, bezogen auf die gesamte Reaktionsmasse).

Die bevorzugte Konzentration des Kettenlängenmoderators hängt von der Struktur des Moderators und vom gewünschten Molekulargewicht des Polymeren ab und liegt zwischen 0 und 100 000 ppm, besonders bevorzugt zwischen 0 und 10 000 ppm, insbesondere 50 bis 9 000 ppm bezogen auf die gesamte Reaktionsmasse.

Die erforderlichen Reaktionszeiten hängen von der Reaktivität des oder der Monomeren, der gewählten Temperatur und Katalysatorkonzentration und vom erforderlichen Umsetzungsgrad ab. Bevorzugt werden Reaktionszeiten zwischen 0.5 und 25 Tagen, besonders bevorzugt zwischen 1 und 10 Tagen, insbesondere 2 bis 9 Tage.

In der Regel ist der gewünschte Polymerisationsgrad erreicht, wenn von den eingesetzten Monomeren weniger als 10 %, vorzugsweise 0 bis 9 %, ganz besonders bevorzugt 0,1 bis 7 %, insbesondere 0,2 bis 5 % in dem nach dem erfindungsgemäßen Verfahren erhaltenen Polymer enthalten sind

Die nach dem erfindungsgemäßen Verfahren hergestellten Polyester weisen in der Regel eine mittlere inhärente Viskosität (Ubbelhode-Viskosimeter, Chloroform, 0.1 %, 25 °C) zwischen 0.2 und 12 dl/g, vorzugsweise zwischen 0.5 und 10 dl/g, besonders bevorzugt zwischen 1.0 und 9.0 dl/g auf

In einer besonders bevorzugten Aüsführungsform des erfindungsgemäßen Verfahrens wird ein Doppelmantelreaktor unter Stickstoffbegasung mit 10 bis 100 kg eines cyclischen Monomers befüllt. Der Doppelmantel wird auf 100 bis 160 °C Außentemperatur aufgeheizt. Sobald das Monomere vollständig geschmolzen ist, werden nacheinander ein Kettenlängenmoderator, vorzugsweise eine oligomere Milchsäure, ein Katalysator, vorzugsweise eine Lösung von Zinnoctanoat in Toluol zugegeben. Die Katalysatormenge ist so berechnet, dass der Zinngehalt bezogen auf die gesamte Reaktionsmasse 5 bis 100 ppm beträgt. Mittels eines Rührers wird die Schmelze 5 bis 60 Minuten homogenisiert und anschließend unter Stickstoffbegasung über einen Schlauch in 8 bis 90 Kunststoffflaschen mit einem Nennvolumen von 0,5 bis 3 Liter aus Polypropylen abgelassen. Die Füllung der Flaschen beträgt zwischen 600 und 3500 g. Die Flaschen werden verschlossen und anschließend in einen auf 90 bis 130 °C vorgeheizten Wärmeschrank gestellt und dort über einen Zeitraum von 2 bis 10 Tagen belassen. Während dieser Zeit wird der Wärmeschrank mit einem leichten Stickstoffstrom inertisiert. Nach Entnahme aus dem Wärmeschrank werden die Flaschen auf Raumtemperatur abgekühlt. Anschließend werden die entstandenen Polymerblöcke den Flaschen entnommen. Materialproben aus den einzelnen Blöcken wurden hinsichtlich der inhärenten Viskosität sowie hinsichtlich des Restgehaltes an Monomer mittels GC wie folgt analysiert.

Die nachfolgenden Beispiele dienen der Illustration exemplarisch durchgeführter Verfahren zur Herstellung der resorbierbaren Polyester. Sie sind lediglich als mögliche, exemplarisch dargestellte Vorgehensweisen zu verstehen, ohne die Erfindung auf deren Inhalt zu beschränken.

### Beispiel 1

Ein 20-Liter-Doppelmantelreaktor aus Glas wird unter Stickstoffbegasung mit 20 kg L-Lactid befüllt. Der Doppelmantel wird auf 125 °C Außentemperatur aufgeheizt.

Sobald das Monomere vollständig geschmolzen ist, werden nacheinander 400 g oligomere L-Milchsäure mit einem zahlenmittleren Molekulargewicht von 1800, 10 ml einer Lösung von Zinnoctanoat in Toluol zugegen. Die Katalysatormenge ist so berechnet, dass der Zinngehalt bezogen auf die gesamte Reaktionsmasse 40 ppm beträgt. Mittels eines mechanischen Rührers wird die Schmelze 10 Minuten homogenisiert und anschließend unter Stickstoffbegasung über einen Schlauch in 17 Kunstzoffflaschen mit einem Nennvolumen von 1 Liter aus Polypropylen abgelassen. Die Füllung der Flaschen beträgt zwischen ca. 1100 und 1200 g. Die Flaschen werden verschlossen und anschließend in einen auf 110 °C vorgeheizten Wärmeschrank gestellt und dort über einen Zeitraum von 5 Tagen belassen. Während dieser Zeit wird der Wärmeschrank mit einem leichten Stickstoffstrom inertisiert. Nach Entnahme aus dem Wärmeschrank werden die Flaschen auf Raumtemperatur abgekühlt. Anschließend werden der Flaschenhälse abgeschnitten und die entstandenen Polymerblöcke den Flaschen entnommen. Materialproben aus den einzelnen Blöcken wurden hinsichtlich der inhärenten Viskosität (Ubbelhode-Viskosimeter, Chloroform, 0.1 %, 25 °C) sowie hinsichtlich des Restgehaltes an L-Lactid mittels GC wie folgt analysiert:

| | inh. Viskosität [dl/g] | Restgehalt Lactid [%] |
|---|---|---|
| maximal | 6,1 | 6,4 |
| minimal | 5,8 | 4,0 |
| mittel | 6,0 | 5,5 |
| Standardabweichung | 0,1 | 0,6 |

Analog werden die Polyester der Beispiele 2 bis 17 hergestellt:

| No. | Monomer-Dosierung | Ansatz [kg] | Behälter | Reaktionstemperatur | Reaktionszeit | Katalysator [ppm] | Moderator [ppm] |
|---|---|---|---|---|---|---|---|
| 2 | L-Lactid | 5 | Polypropylen | 110°C | 5 Tage | 50 | ohne |
| 3 | L-Lactid | 20 | Polypropylen 1 Liter | 110°C | 5 Tage | 40 | 7000 L * |
| 4 | L-Lactid/ DL-Lactid 72 / 28 Mol% | 20 | Polypropylen 1 Liter | 110 °C | 5 Tage | 40 | 800 L * |
| 5 | L-Lactid/ TMC 70/30 Gew.% | 20 | Polypropylen 1 Liter | 110°C | 9 Tage | 40 | 2000 L-Ethyllactat |
| 6 | L-Lactid/ TMC 70/30 Gew.% | 5 | Polypropylen 1 Liter | 110°C | 4 Tage | 40 | 5000 L-Ethyllactat |
| 7 | DL-Lactid | 2,5 | Polypropylen 1 Liter | 127 °C | 5 Tage | 20 | 7000 DL-Ethyllactat |
| 8 | DL-Lactid | 1,5 | Teflon 0,5 Liter | 130°C | 5 Tage | 40 | 6000 DL-Ethyllactat |
| 9 | DL-Lactid/ Glycolid 50/50 Mol% | 2,5 | Polypropylen 0,5 Liter | 110 °C | 3 Tage | 40 | ohne |
| 10 | L-Lactid | 5 | Polypropylen 2 Liter | 110°C | 5 Tage | 40 | ohne |
| 11 | L-Lactid | 5 | Polypropylen 4 Liter | 110°C | 5 Tage | 40 | ohne |
| 12 | Glycolid | 2 | Teflon 0,5 Liter | 160°C | 1 bis 4 Tage | 10 | ohne |
| 13 | Glycolid/ TMC 70/30 Gew.% | 2 | Teflon 0,5 Liter | 160°C | 1 bis 4 Tage | 10 | ohne |
| 14 | L-Lactid/ Glycolid 87/13 Mol% | 7 | Polypropylen 1 Liter | 112°C | 5 Tage | 40 | 80 Dodecanol |
| 15 | L-Lactid/ DL-Lactid 83/17 Mol% | 6 | Polypropylen 1 Liter | 110°C | 8 Tage | 50 | 3000 L* |
| 16 | L-Lactid/ DL-Lactid 72/28 Mol% | 4 | Polypropylen 1 Liter | 115°C | 3 Tage | 40 | 600 Dodecanol |
| 17 | L-Lactid | 51 kg | Polypropylen 1 Liter | 112°C | 3 Tage | 40 | 800 Dodecanol |
| Katalysator in allen Fällen: Zinn(II)ethylhexanoat, Angabe in ppm Zinn bezogen auf die Reaktionsmasse | | | | | | | |

| | | | | | | | |
|---|---|---|---|---|---|---|---|
| *. L = oligomere L-Milchsäure mit einem zahlenmittleren Molekulargewicht von 1800 | | | | | | | |

Die so erhaltenen Polyester weisen folgende Eigenschaften auf:

| No. | inh. Viskosität [dl/g] | Restgehalt Monomer [%] |
|---|---|---|
| 2 | 8,4 | 1.5 |
| 3 | 3.3 | 5.0 |
| 4 | 7.5 | 4.5 |
| 5 | 1,3 | 0,3 Lactid, 0,2 TMC |
| 6 | 0,7 | 0,3 Lactid, 0,3 TMC |
| 7 | 0,5 | 1.8 |
| 8 | 0,5 | 1.9 |
| 9 | 3,4 ** | 7.6 DL-Lactid Glycolid nicht nachweisbar |
| 10 | 7,8 | 2.0 |
| 11 | 8,3 | 1.9 |
| 12 | 1,5 bis 2,1 ** | 0,5 bis 2,6 |
| 13 | 2,1 bis 2,3 ** | < 0,4 Glycolid 0,4 bis 2,6 TMC |
| 14 | 6,3 | 9 |
| 15 | 4,2 | 7 |
| 16 | 3,8 | 2 |
| 17 | 3,8 | 0,50 |

Die inhärente Viskosität wurde in Chloroform bei 25 °C in 0.1 % Lösung ermittelt, Ausnahmen sind mit ** gekennzeichnet.

In diesen Fällen erfolgte die Bestimmung in Hexafluorisopropanol bei 30 °C in 0.1 % Lösung.

## Patentansprüche

1. Verfahren zur Herstellung von resorbierbaren Polyestern durch Massepolymerisation **dadurch gekennzeichnet, dass** die Reaktionskomponenten in einem Rührwerksreaktor aufgeschmolzen und homogenisiert werden, die Reaktionsmischung anschließend in mehrere kleinervolumige Behälter überführt wird, die Reaktionsmischung in diesen Behältern auspolymensiert wird und der erhaltene Polyester durch Entnahme aus den Behältern isoliert wird.

2. Verfahren nach Anspruch 1, **dadurch gekennzeichnet, dass** das Polymer eine inhärente Viskosität zwischen 0.2 und 12 aufweist.

3. Verfahren nach Anspruch 1 oder 2, **dadurch gekennzeichnet, dass** der resorbierbare Polyester ein Polylactid oder Polyglycolid ist.

4. Verfahren nach Anspruch 3, **dadurch gekennzeichnet, dass** der resorbierbare Polyester Poly(L-Lactid) ist.

5. Verfahren nach Anspruch 3, **dadurch gekennzeichnet, dass** der resorbierbare Polyester ein Copolymer aus verschiedenen stereoisomeren Lactiden ist.

6. Verfahren nach Anspruch 5, **dadurch gekennzeichnet, dass** der resorbierbare Polyester ein Copolymer aus L-Lactid und DL-Lactid ist.

7. Verfahren nach Anspruch 3, **dadurch gekennzeichnet, dass** der resorbierbare Polyester Poly(DL-Lactid) ist.

8. Verfahren nach einem der Ansprüche 1 bis 3, **dadurch gekennzeichnet, dass** der resorbierbare Polyester ein Copolymer aus Glycolid und Trimethylencarbonat ist.

9. Verfahren nach einem der Ansprüche 1 bis 7, **dadurch gekennzeichnet, dass** der resorbierbare Polyester ein Copolymer aus Lactid und Glycolid ist.

10. Verfahren nach Anspruch 9 **dadurch gekennzeichnet, dass** der resorbierbare Polyester ein Copolymer aus DL-Lactid oder L-Lactid und Glycolid ist.

11. Verfahren nach einem der Ansprüche 1 bis 7, **dadurch gekennzeichnet, dass** der resorbierbare Polyester ein Copolymer aus Lactid und Trimethylencarbonat ist.

12. Verfahren nach Anspruch 1 bis 7, **dadurch gekennzeichnet, dass** der resorbierbare Polyester ein Copolymer aus Lactid und ε-Caprolacton ist.

13. Verfahren nach einem der vorangehenden Ansprüche, **dadurch gekennzeichnet, dass** der resorbierbare Polyester ein Terpolymer ist.

14. Verfahren nach einem der vorangehenden Ansprüche, **dadurch gekennzeichnet, dass** die kleinervolumigen Behälter aus einem Kunststoff bestehen.

15. Verfahren nach Anspruch 14, **dadurch gekennzeichnet, dass** die kleinervolumigen Behälter im wesentlichen aus einem Polyolefin bestehen.

16. Verfahren nach Anspruch 15 **dadurch gekennzeichnet, dass** die Kunststoffbehälter aus Polypropylen bestehen.

17. Verfahren nach einem der Ansprüche 1 bis 14, **dadurch gekennzeichnet, dass** die Kunststoffbehälter aus einem fluorierten oder teilfluorierten Polymeren bestehen.

18. Verfahren nach Anspruch 17 **dadurch gekennzeichnet, dass** die Kunststoffbehälter aus Polytetrafluorethan bestehen.

19. Verfahren nach einem der vorangehenden Ansprüche, **dadurch gekennzeichnet, dass** das Verhältnis des Innenvolumen des Rührwerksreaktors zu dem des Innenvolumens eines der kleineren Behälter zwischen 1000 : 1 und 2 : 1 liegt.

20. Verfahren nach einem der vorangehenden Ansprüche, **dadurch gekennzeichnet, dass** das Innenvolumen des kleineren Behälter zwischen 50 ml und 10 Litern liegt.

21. Verfahren nach Anspruch 20 **dadurch gekennzeichnet, dass** das Innenvolumen zwischen 100 ml und 5 Litern liegt.

22. Verfahren zur Herstellung von resorbierbaren Implantaten, **dadurch gekennzeichnet, dass** ein oder mehrere resorbierbare Polyester nach einem der Ansprüche 1-21 hergestellt werden und zu entsprechenden Implantaten weiter verarbeitet werden.

## Claims

1. Process for preparing reabsorbable polyesters by bulk polymerisation, **characterised in that** the reaction components are melted and homogenised in a stirred reactor, the reaction mixture is then transferred into a number of smaller-volume containers, the reaction mixture is polymerised in these containers and the polyester obtained is isolated by removing it from the containers.

2. Process according to claim 1, **characterised in that** the polymer has an inherent viscosity of between 0.2 and 12.

3. Process according to claim 1 or 2, **characterised in that** the reabsorbable polyester is a polylactide or polyglycolide.

4. Process according to claim 3, **characterised in that** the reabsorbable polyester is poly(L-lactide).

5. Process according to claim 3, **characterised in that** the reabsorbable polyester is a copolymer of various stereoisomeric lactides.

6. Process according to claim 5, **characterised in that** the reabsorbable polyester is a copolymer of L-lactide and DL-lactide.

7. Process according to claim 3, **characterised in that** the reabsorbable polyester is poly(DL-lactide).

8. Process according to one of claims 1 to 3, **characterised in that** the reabsorbable polyester is a copolymer of glycolide and trimethylene carbonate.

9. Process according to one of claims 1 to 7, **characterised in that** the reabsorbable polyester is a copolymer of lactide and glycolide.

10. Process according to claim 9, **characterised in that** the reabsorbable polyester is a copolymer of DL-lactide or L-lactide and glycolide.

11. Process according to one of claims 1 to 7, **characterised in that** the reabsorbable polyester is a copolymer of lactide and trimethylene carbonate.

12. Process according to claim 1 to 7, **characterised in that** the reabsorbable polyester is a copolymer of lactide and ε-caprolactone.

13. Process according to anyone of the preceding claims, **characterised in that** the reabsorbable polyester is a terpolymer.

14. Process according to anyone of the preceding claims, **characterised in that** the smaller-volume containers consist of a plastic.

15. Process according to claim 14, **characterised in that** the smaller-volume containers consist essentially of a polyolefin.

16. Process according to claim 15, **characterised in that** the plastic containers consist of polypropylene.

17. Process according to one of claims 1 to 14, **characterised in that** the plastic containers consist of a fluorinated or partially fluorinated polymer.

18. Process according to claim 17, **characterised in that** the plastic containers consist of polytetrafluoroethane.

19. Process according to one of the preceding claims, **characterised in that** the ratio of the internal volume of the stirred reactor to that of the internal volume of one of the smaller containers is between 1000:1 and 2:1.

20. Process according to one of the preceding claims, **characterised in that** the internal volume of the smaller container is between 50 ml and 10 litres.

21. Process according to claim 20, **characterised in that** the internal volume is between 100 ml and 5 litres.

22. Process for preparing reabsorbable implants, **characterised in that** one or more reabsorbable polyesters are prepared according to one or more of claims 1 to 21 and are further processed to form corresponding implants.

## Revendications

1. Procédé de production de polyesters résorbables par polymérisation en masse **caractérisé en ce que** les composants réactionnels sont fondus et homogénéisés dans un réacteur à agitateur, le mélange réactionnel est ensuite transféré dans plusieurs récipients de plus petit volume, le mélange réactionnel est polymérisé dans ces récipients et le polyester obtenu est isolé par prélèvement dans les récipients.

2. Procédé selon la revendication 1 **caractérisé en ce que** le polymère présente une viscosité inhérente entre 0,2 et 12.

3. Procédé selon la revendication 1 ou 2 **caractérisé en ce que** le polyester résorbable est un polylactide ou un polyglycolide.

4. Procédé selon la revendication 3 **caractérisé en ce que** le polyester résorbable est le poly(L-lactide).

5. Procédé selon la revendication 3 **caractérisé en ce que** le polyester résorbable est un copolymère de différents lactides stéréoisomères.

6. Procédé selon la revendication 5 **caractérisé en ce que** le polyester résorbable est un copolymère de L-lactide et de DL-lactide.

7. Procédé selon la revendication 3 **caractérisé en ce que** le polyester résorbable est le poly(DL-lactide).

8. Procédé selon l'une des revendications 1 à 3 **caractérisé en ce que** le polyester résorbable est un copolymère de glycolide et de carbonate de triméthylène.

9. Procédé selon l'une des revendications 1 à 7 **caractérisé en ce que** le polyester résorbable est un copolymère de lactide et de glycolide.

10. Procédé selon la revendication 9 **caractérisé en ce que** le polyester résorbable est un copolymère de DL-lactide ou de L-lactide et de glycolide.

11. Procédé selon l'une des revendications 1 à 7 **caractérisé en ce que** le polyester résorbable est un copolymère de lactide et de carbonate de triméthylène.

12. Procédé selon les revendications 1 à 7 **caractérisé en ce que** le polyester résorbable est un copolymère de lactide et d'ε-caprolactone.

13. Procédé selon l'une des revendications précédentes **caractérisé en ce que** le polyester résorbable est un terpolymère.

14. Procédé selon l'une des revendications précédentes **caractérisé en ce que** les récipients de plus petit volume consistent en une matière synthétique.

15. Procédé selon la revendication 14 **caractérisé en ce que** les récipients de plus petit volume consistent essentiellement en une polyoléfine.

16. Procédé selon la revendication 15 **caractérisé en ce que** les récipients en matière synthétique consistent en polypropylène.

17. Procédé selon l'une des revendications 1 à 14 **caractérisé en ce que** les récipients en matière synthétique consistent en un polymère fluoré ou partiellement fluoré.

18. Procédé selon la revendication 17 **caractérisé en ce que** les récipients en matière synthétique consistent en polytétrafluoroéthane.

19. Procédé selon l'une des revendications précédentes **caractérisé en ce que** le rapport du volume interne du réacteur à agitateur au volume interne de l'un des récipients plus petits est situé entre 1000 : 1 et 2 : 1.

20. Procédé selon l'une des revendications précédentes **caractérisé en ce que** le volume interne du récipient plus petit est situé entre 50 ml et 10 litres.

21. Procédé selon la revendication 20 **caractérisé en ce que** le volume interne est situé entre 100 ml et 5 litres.

22. Procédé de production d'implants résorbables **caractérisé en ce qu'**un ou plusieurs polyesters résorbables selon l'une des revendications 1-21 sont produits et transformés en implants correspondants.
